# EUROPÄISCHE PATENTSCHRIFT

(11) **EP 3 251 779 B1**
(45) Veröffentlichungstag und Bekanntmachung des Hinweises auf die Patenterteilung: **01.05.2019**
(21) Anmeldenummer: 17170958.7
(22) Anmeldetag: 15.05.2017
(51) Int. Cl.: B23K 1/00, B23K 1/08, B23K 1/20, B23K 3/06, B23K 101/36

(54) **VORRICHTUNG ZUM BEREITSTELLEN EINES LÖTMEDIUMS UND VERFAHREN ZUM BETRIEB EINER SOLCHEN VORRICHTUNG**
DEVICE FOR PROVIDING A SOLDERING MEDIUM AND METHOD OF OPERATING SUCH A DEVICE
DISPOSITIF D'ALIMENTATION DE MATERIAU DE BRASURE ET PROCÉDÉ DE COMMANDE D'UN TEL DISPOSITIF

(30) Priorität: 19.05.2016 DE 102016208592
(43) Veröffentlichungstag der Anmeldung: 06.12.2017
(73) Patentinhaber: Meteor AG, 8807 Freienbach (CH)
(72) Erfinder: DOSCH, Roman, 7453 Tinizong (CH); MEIER, Thomas, 5018 Erlinsbach (CH)
(74) Vertreter: Liedtke, Markus

(56) Entgegenhaltungen:
- WO-A1-95/20456
- DE-A1- 1 589 502
- DE-U1- 20 307 993
- JP-A- S58 209 470

## Beschreibung

Die Erfindung betrifft eine Vorrichtung zum Bereitstellen eines Lötmediums, siehe Anspruch 1. Die Erfindung betrifft weiterhin ein Verfahren zum Betrieb einer solchen Vorrichtung, siehe Anspruch 6.

Lötmedien werden zum elektrischen und mechanischen Verbinden elektrischer Komponenten verwendet. Beispielsweise werden beim Fertigen elektrischer Spulen stirnseitige Enden eines Kupferlackdrahts jeweils um einen Stift gewickelt, die als Kontakte für einen elektrischen Anschluss vorgesehen sind. Eine erforderliche Kontaktierung des Kupferlackdrahts mit den Stiften wird dabei mittels Löten vorgenommen. Für eine gute elektrische Kontaktierung sind einerseits eine Entfernung einer Lackisolationsschicht des Kupferlackdrahts und andererseits eine mechanische Verbindung zwischen dem Kupferlackdraht und dem jeweiligen Stift erforderlich. Die Entfernung der Lackisolationsschicht kann mittels einer Temperatur des Lötmediums von ca. 500°C, erfolgen, wobei die Lackisolationsschicht abgebrannt wird. Derartig hohe Temperaturen können jedoch Materialien in Vorrichtungen, welche das Lötmedium bereitstellen, belasten. Die Verwendung niedriger Temperaturen wiederum ermöglicht kein optimales Entfernen der Lackisolationsschicht des Kupferlackdrahts.

Aus DE 203 07 993 U1 (Basis des Oberbegriffes des Anspruchs 1) ist eine Vorrichtung zum Löten bekannt, welche ein Reservoir umfasst.

Aus WO 95/20456 A1 ist eine Lötvorrichtung bekannt.

Aus DE 1 589 502 A1 sind ein Verfahren und eine Vorrichtung zum Anlöten eines metallischen Anschlussleiters bekannt.

Aus JP S58 209470 A ist eine automatische Lötvorrichtung bekannt.

Der Erfindung liegt daher die Aufgabe zu Grunde, eine gegenüber dem Stand der Technik verbesserte Vorrichtung zum Bereitstellen eines Lötmediums sowie ein geeignetes Verfahren zum Betrieb einer solchen Vorrichtung anzugeben.

Hinsichtlich der Vorrichtung wird die Aufgabe erfindungsgemäß mit den in Anspruch 1 angegebenen Merkmalen gelöst. Hinsichtlich des Verfahrens wird die Aufgabe erfindungsgemäß mit den in Anspruch 9 angegebenen Merkmalen gelöst.

Vorteilhafte Ausgestaltungen der Erfindung sind Gegenstand der Unteransprüche.

Eine erfindungsgemäße Vorrichtung zum Bereitstellen eines Lötmediums umfasst mindestens ein Behältnis zur Aufnahme eines flüssigen Lötmediums, wobei das mindestens eine Behältnis thermisch mit einer ersten Temperiervorrichtung zur Temperierung des flüssigen Lötmediums gekoppelt ist. Die Vorrichtung umfasst weiterhin zumindest eine vom Behältnis wegführende Zuführungsleitung, wobei ein Abschnitt der zumindest einen Zuführungsleitung mit einer zweiten Temperiervorrichtung zur weiteren Temperierung des flüssigen Lötmediums gekoppelt ist und wobei die zumindest eine Zuführungsleitung mit einer Austrittsöffnung zum Austritt des flüssigen, weiter temperierten Lötmediums in eine äußere Umgebung versehen ist. Des Weiteren umfasst die Vorrichtung mindestens eine Rückführungsleitung zur Rückführung überschüssigen Lötmediums in das Behältnis

Die derart ausgebildete Vorrichtung ermöglicht das Bereitstellen eines Lötmediums mit einer zur Herstellung einer mechanischen und elektrischen Verbindung zwischen zwei Komponenten geeigneten Temperatur, wobei eine Materialbelastung von Komponenten der Vorrichtung möglichst gering gehalten wird. Dies ist mittels der Temperiervorrrichtungen möglich, die das Lötmedium in Abhängigkeit einer Position des Lötmediums innerhalb der Vorrichtung temperieren.

Gemäß der Erfindung ist die mindestens eine Rückführungsleitung mit einer dritten Temperiervorrichtung zur Temperierung des überschüssigen Lötmediums gekoppelt. Dies ermöglicht die Temperierung des Lötmediums in der Rückführungsleitung auf eine für das Behältnis geeignete Temperatur des Lötmediums. Vorzugsweise wird eine Schmelztemperatur des Lötmediums in der wenigstens einen Rückführungsleitung nicht unterschritten, so dass eine Kontaminierung der wenigstens einen Rückführungsleitung mit dem Lötmedium verhindert oder zumindest verringert wird.

Erfindungsgemäß umfasst die Vorrichtung des Weiteren mindestens eine Regeleinheit zur Temperaturregelung des Lötmediums, wobei die Regeleinheit mit wenigstens zwei Temperatursensoren gekoppelt ist und wobei mindestens ein Temperatursensor im Behältnis angeordnet ist und mindestens ein weiterer Temperatursensor im Abschnitt der zumindest einen Zuführungsleitung angeordnet ist. Die Temperatursensoren erfassen jeweils eine Ist-Temperatur des Lötmediums, wobei die Regeleinheit die erfassten Ist-Temperaturen jeweils mit einem vorgegebenen Sollwert vergleicht. Vorzugsweise ist ein Sollwert derart vorgegeben, dass das Lötmedium im Behältnis in einem flüssigen Zustand und mit einer zur Förderung des Lötmediums in die zumindest eine Zuführungsleitung geeigneten Viskosität aufgenommen ist. Eine Temperatur des Lötmediums ist im Behältnis bevorzugt ca. 250°C, so dass Materialbelastungen gering sind. Im Abschnitt der zumindest einen Zuführungsleitung wird das Lötmedium vorzugsweise auf eine zur Herstellung einer elektrischen und mechanischen Verbindung zwischen zwei Komponenten geeigneten Temperatur erwärmt. Beispielsweise wird das Lötmedium auf eine Temperatur von ca. 500°C erwärmt, wobei diese Temperatur z. B. zur Entfernung einer Lackisolationsschicht eines Kupferlackdrahts geeignet ist.

Gemäß einer Ausgestaltung der Erfindung umfasst die Vorrichtung zusätzlich wenigstens eine Fördervorrichtung, die beispielsweise als eine Pumpe ausgebildet ist. Die wenigstens eine Fördervorrichtung ist dabei zur Förderung des temperierten, flüssigen Lötmediums in die zumindest eine Zuführungsleitung vorgesehen.

Gemäß einer weiteren Ausgestaltung der Erfindung ist die zweite Temperiervorrichtung mit einem die Austrittsöffnung umfassenden Abschnitt der zumindest einen Zuführungsleitung verbunden. Damit wird sichergestellt, dass das Lötmedium erst im Bereich der Austrittsöffnung weiter erwärmt wird. Die Zuführungsleitung wird dadurch nur abschnittsweise thermisch belastet.

Des Weiteren kann die Austrittsöffnung als eine Düsenaustrittsöffnung ausgebildet sein. Hierdurch ist ein gleichmäßiges Austreten des flüssigen Lötmediums möglich. Dazu ist beispielsweise in der Zuführungsleitung eine Düse angeordnet, die sich in Richtung der Düsenaustrittsöffnung verjüngt.

Gemäß der Erfindung ist die mindestens eine Rückführungsleitung mit einem trichterförmigen Auffangbehältnis verbunden, dessen Einfüllöffnung unterhalb der Austrittsöffnung der Zuführungsleitung und dieser zugewandt angeordnet ist und dessen Auslassöffnung mit der Rückführungsleitung verbunden ist. Dies ermöglicht eine zuverlässige Rückführung überschüssigen Lötmediums, welches aus der Austrittsöffnung austritt.

Als Lötmedium wird beispielsweise Lötzinn verwendet, welches hauptsächlich aus einer Legierung aus Zinn und beispielsweise Blei besteht.

In einem Verfahren zum Betrieb der erfindungsgemäßen Vorrichtung wird ein Lötmedium in einem Behältnis auf eine vorgegebene Temperatur oberhalb der Schmelztemperatur des Lötmediums temperiert. Weiterhin wird das flüssige, temperierte Lötmedium in zumindest eine Zuführungsleitung gefördert und das flüssige Lötmedium wird in einem Abschnitt der zumindest einen Zuführungsleitung auf eine weitere vorgegebene Temperatur temperiert. Das flüssige, auf die weitere vorgegebene Temperatur temperierte Lötmedium wird mittels einer Fördervorrichtung in die Zuführungsleitung gefördert, z. B. gepumpt, so dass das Lötmedium aus einer Austrittsöffnung der zumindest einen Zuführungsleitung in eine äußere Umgebung austritt. Überschüssiges Lotmedium wird über ein Auffangbehältnis aufgefangen und von diesem über eine Rückführungsleitung in das Behältnis zurückgeführt.

Mittels des Verfahrens ist ein geeigneter Betrieb der erfindungsgemäßen Vorrichtung möglich, wobei Komponenten der Vorrichtung, insbesondere Komponenten zur Führung des Lötmediums, weitestgehend geschont werden und das Lötmedium zum Zeitpunkt des Austritts eine zum Löten optimierte Temperatur aufweist.

Gemäß einer Ausgestaltung des Verfahrens wird das überschüssige Lötmedium in der wenigstens einen Rückführungsleitung mittels einer dritten Temperiervorrichtung auf eine vorgegebene Temperatur, z. B. auf eine Temperatur von 250°C, temperiert.

Gemäß einer weiteren Ausgestaltung des Verfahrens wird das Lötmedium im Behältnis und in der Rückführungsleitung auf eine vorgegebene Temperatur von größer als 200°C, insbesondere größer als 220°C, temperiert. Beispielsweise beträgt die vorgegebene Temperatur 250°C. Dabei wird mittels des Temperatursensors im Behältnis eine Ist-Temperatur des Lötmediums erfasst und diese bei Abweichung von der vorgegebenen Temperatur auf die vorgegebene Temperatur temperiert. Dies erfolgt mittels der Regeleinheit, die mit der ersten Temperiervorrichtung verbunden ist.

Gemäß einer weiteren Ausgestaltung des Verfahrens wird das Lötmedium im Abschnitt der zumindest einen Zuführungsleitung auf eine weitere vorgegebene Temperatur von größer als 450°C, insbesondere größer als 480°C, temperiert. Beispielsweise beträgt die vorgegebene Temperatur 500°C. Diese Temperatur entspricht einer zur Entfernung einer Lackisolationsschicht eines Kupferlackdrahtes geeigneten Temperatur. Hierbei wird mittels des weiteren Temperatursensors in der Zuführungsleitung eine Ist-Temperatur des Lötmediums erfasst und diese bei Abweichung von der vorgegebenen Temperatur auf die vorgegebene Temperatur temperiert. Dies erfolgt mittels der Regeleinheit, die mit der zweiten Temperiervorrichtung verbunden ist.

Ausführungsbeispiele der Erfindung werden im Folgenden anhand einer Zeichnung näher erläutert.

Darin zeigt:

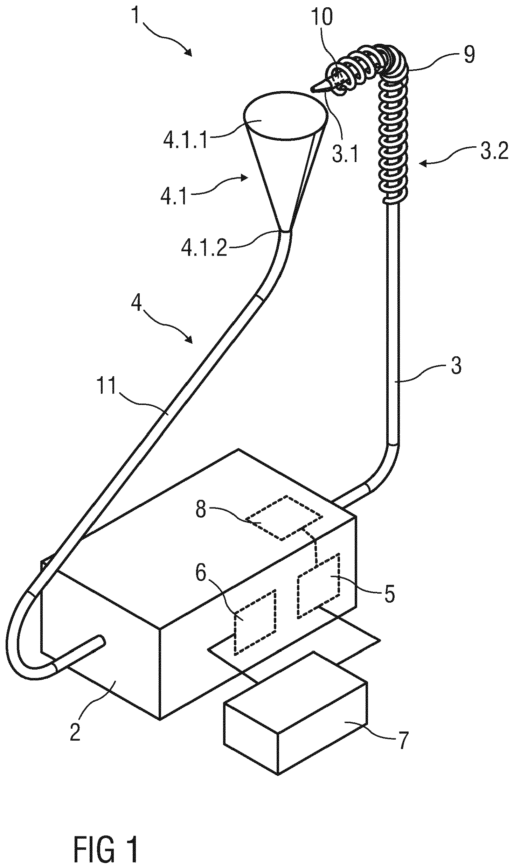

- Figur 1: schematisch eine perspektivische Ansicht einer erfindungsgemäßen Vorrichtung zum Bereitstellen eines Lötmediums.

Die einzige **Figur 1** zeigt ein erfindungsgemäßes Ausführungsbeispiel einer Vorrichtung 1 zum Bereitstellen eines nicht näher gezeigten Lötmediums, z. B. Lötzinn.

Die Vorrichtung 1 umfasst ein Behältnis 2 zur Aufnahme des Lötmediums, eine Zuführungsleitung 3 mit einer Austrittsöffnung 3.1, über welche das Lötmedium austreten kann, und eine Rückführungsleitung 4 zur Rückführung überschüssigen Lötmediums in das Behältnis 2.

Das Behältnis 2 ist im vorliegenden Ausführungsbeispiel kastenförmig dargestellt, kann jedoch alternativ beliebige andere geometrische Abmessungen aufweisen. Wie bereits zuvor erwähnt, dient das Behältnis 2 der Aufnahme des Lötmediums, welches vorzugsweise in einem flüssigen Zustand im Behältnis 2 aufgenommen ist. Dazu ist das Behältnis 2 aus einem gut wärmeleitenden Material gefertigt, z. B. Metall, so dass das Lötmedium mit einer Temperatur oberhalb des Schmelzpunktes temperierbar ist.

Zur Temperierung des Lötmediums ist das Behältnis 2 thermisch mit einer ersten Temperiervorrichtung 5 gekoppelt, die im vorliegenden Ausführungsbeispiel mit gestrichelten Linien angedeutet ist. Die erste Temperiervorrichtung 5 ist insbesondere eine Heizvorrichtung, die das Lötmedium auf eine Temperatur oberhalb des Schmelzpunktes, insbesondere auf eine Temperatur von ca. 250°C, erwärmt. Mit einer solchen Temperatur kann das Lötmedium in einem flüssigen Zustand gehalten werden und eine thermische Materialbelastung ist vernachlässigbar klein. Insbesondere Letzteres ist für die Zuführungsleitung 3 von Bedeutung. Die erste Temperiervorrichtung 5 ist beispielsweise eine Infrarotheizung.

Zur Sicherstellung, dass eine Ist-Temperatur des Lötmediums einer vorgegebenen Soll-Temperatur entspricht, ist im Behältnis ein Temperatursensor 6 angeordnet, welcher die Ist-Temperatur des Lötmediums erfasst. Dieser wiederum ist mit einer Regeleinheit 7 gekoppelt, mittels welcher die Ist-Temperatur des Lötmediums auf die Soll-Temperatur geregelt wird. Dazu ist die Regeleinheit 7 mit der ersten Temperiervorrichtung 5 gekoppelt und aktiviert diese in Abhängigkeit der erfassten Ist-Temperatur des Lötmediums.

Zur Förderung des Lötmediums in die Zuführungsleitung 3 ist im vorliegenden Ausführungsbeispiel eine Fördervorrichtung 8 vorgesehen, die insbesondere als eine Pumpe ausgebildet ist. Mittels der Fördervorrichtung 8 wird das Lötmedium in die Zuführungsleitung 3 gepumpt, so dass dieses über die Austrittsöffnung 3.1 austreten kann. Vorzugsweise ist der Temperatursensor 6 der Fördervorrichtung 8 in Richtung der Zuführungsleitung 3 vorgeschaltet, so dass die Fördervorrichtung 8 in Abhängigkeit der erfassten Ist-Temperatur des Lötmediums aktivierbar ist. Dazu ist die Regeleinheit 7 auch mit der Fördervorrichtung 8 gekoppelt. Beispielsweise ist in der Regeleinheit 7 ein Schwellwert von 200°C, insbesondere von 220°C, hinterlegt, bei dessen Unterschreitung die Fördervorrichtung 8 deaktiviert wird. Damit kann die Förderung des Leitmediums in die Zuführungsleitung mit einer optimalen Temperatur sichergestellt werden.

Die Zuführungsleitung 3 ist beispielhaft als ein Rohr dargestellt, kann jedoch auch als ein Rohrsystem, bestehend aus mehreren Rohren, ausgebildet sein. Die Zuführungsleitung 3 ist ebenfalls aus einem gut wärmeleitenden Material gefertigt, so dass das erwärmte Lötmedium in einem Abschnitt 3.2 der Zuführungsleitung 3, welcher die Austrittsöffnung 3.1, umfasst, weiter temperiert werden kann. Insbesondere ist eine weitere Erwärmung des Lötmediums an einem dem Behältnis 2 abgewandten Endbereich der Zuführungsleitung 3 vorgesehen. Dazu ist der Abschnitt 3.2 thermisch mit einer zweiten Temperiervorrichtung 9 gekoppelt, mittels welcher das Lötmedium im Abschnitt 3.2 der Zuführungsleitung 3 auf eine Temperatur von ca. 500°C erwärmt werden kann. Eine derart hohe Temperatur ist vorteilhaft bei der Verwendung von isolierten Kupferlackdrähten, bei denen während eines Lötprozesses eine Entfernung der Lackisolationsschicht zur Herstellung einer elektrischen Verbindung zwischen dem Kupferlackdraht und einer weiteren Komponente, z. B. ein Kontaktstift, erforderlich ist.

Die zweite Temperiervorrichtung 9 ist im vorliegenden Ausführungsbeispiel als eine Spiralheizung ausgebildet. Damit ist eine gleichmäßige Erwärmung des Lötmediums möglich. Dadurch, dass die zweite Temperiervorrichtung 9 nur mit einem Endbereich der Zuführungsleitung 3 thermisch gekoppelt ist, kann eine Materialbelastung der Zuführungsleitung 3 gering gehalten werden.

Gemäß dem vorliegenden Ausführungsbeispiel ist die Austrittsöffnung 3.1 eine Düsenaustrittsöffnung einer Düse, welche sich in Richtung der Austrittsöffnung 3.1 verjüngt. Damit kann ein gezieltes Austreten des Lötmediums sichergestellt werden. Alternativ kann die Zuführungsleitung 3 auch ohne eine Düse ausgebildet sein, wobei die Austrittsöffnung 3.1 als ein offenes Ende der Zuführungsleitung 3 ausgebildet ist und das Lötmedium in Abhängigkeit eines Drucks, mit welchem die Fördervorrichtung 8 arbeitet, aus der Austrittsöffnung 3.1 austritt.

Zur Sicherstellung, dass eine Ist-Temperatur des austretenden Lötmediums der vorgegebenen Soll-Temperatur, hierbei ca. 500°C, entspricht, ist der Düse in Richtung der Austrittsöffnung 3.1 ein weiterer Temperatursensor 10 vorgeschaltet. Dieser ist ebenfalls mit der Regeleinheit 7 gekoppelt, so dass eine Deaktivierung der Fördervorrichtung 8 möglich ist, wenn die Ist-Temperatur im Bereich der Austrittsöffnung 3.1 von der Soll-Temperatur abweicht. Dazu kann ebenfalls ein bestimmter Schwellwert in der Regeleinheit 7 hinterlegt sein.

Zum Auffangen und Rückführen überschüssigen Lötmediums ist die Rückführungsleitung 4 vorgesehen. Gemäß dem vorliegenden Ausführungsbeispiel ist die Rückführungsleitung 4 mit einem trichterförmigen Auffangbehältnis 4.1 versehen. Das Auffangbehältnis 4.1 weist dabei eine Einfüllöffnung 4.1.1 auf, die mit einem bestimmten Abstand unterhalb der Austrittsöffnung 3.1 der Zuführungsleitung 3 und dieser zugewandt angeordnet ist. Weiterhin umfasst das Auffangbehältnis 4.1 eine Auslassöffnung 4.1.2 mit einem gegenüber der Einfüllöffnung 4.1.1 verringerten Durchmesser. Die Auslassöffnung 4.1.2 ist mit der Rückführungsleitung 4 verbunden. Damit kann überschüssiges Lötmedium sicher aufgefangen und in das Behältnis 2 zurückgeführt werden.

Da das Lötmedium beim Austreten aus der Austrittsöffnung 3.1 eine Temperatur von ca. 500°C aufweist, ist die Rückführungsleitung 4 thermisch mit einer dritten Temperiervorrichtung 11 gekoppelt, mittels welcher das Lötmedium auf die Soll-Temperatur des Lötmediums im Behältnis 2, hierbei ca. 250°C, temperierbar ist. Die dritte Temperiervorrichtung 11 kann dabei sowohl als Kühlvorrichtung als auch als Heizvorrichtung ausgebildet sein. Dies ist abhängig von einer Ist-Temperatur des Lötmediums in der Rückführungsleitung. Hierbei kann in der Rückführungsleitung ebenfalls ein Temperatursensor angeordnet sein, welcher jedoch nicht dargestellt ist. Mittels der dritten Temperiervorrichtung 11 kann somit eine optimale Temperatur des Lötmediums erreicht werden, wobei das Lötmedium vorzugsweise in einem flüssigen Zustand gehalten wird, so dass eine Kontaminierung der Rückführungsleitung mit festem Lötmedium verhindert wird.

Weiterhin wird mittels der dritten Temperiervorrichtung 11 eine zu hohe Temperatur des Lötmediums verhindert, so dass eine Materialbelastung der Rückführungsleitung 4 sowie des Behältnisses 2 in vorteilhafter Weise gering ist.

An einem mit dem Behältnis 2 verbundenen Ende der Rückführungsleitung 4 kann zudem ein Ventil angeordnet sein, welches mit der Regeleinheit 7 verbunden ist, so dass das Ventil gegebenenfalls in Abhängigkeit erfasster Ist-Temperaturen des Lötmediums schließbar ist.

### BEZUGSZEICHENLISTE

- 1: Vorrichtung
- 2: Behältnis
- 3: Zuführungsleitung
- 3.1: Austrittsöffnung
- 3.2: Abschnitt
- 4: Rückführungsleitung
- 4.1: Auffangbehältnis
- 4.1.1: Einfüllöffnung
- 4.1.2: Auslassöffnung
- 5: erste Temperiervorrichtung
- 6: Temperatursensor
- 7: Regeleinheit
- 8: Fördervorrichtung
- 9: zweite Temperiervorrichtung
- 10: Temperatursensor
- 11: dritte Temperiervorrichtung

## Patentansprüche

1. Vorrichtung (1) zum Bereitstellen eines Lötmediums, umfassend:
- mindestens ein Behältnis (2) zur Aufnahme eines flüssigen Lötmediums, wobei das mindestens eine Behältnis (2) thermisch mit einer ersten Temperiervorrichtung (5) zur Temperierung des flüssigen Lötmediums gekoppelt ist,
- zumindest eine vom Behältnis (2) wegführende Zuführungsleitung (3), wobei ein Abschnitt (3.2) der zumindest einen Zuführungsleitung (3) mit einer zweiten Temperiervorrichtung (9) zur weiteren Temperierung des flüssigen Lötmediums gekoppelt ist und wobei die zumindest eine Zuführungsleitung (3) mit einer Austrittsöffnung (3.1) zum Austritt des flüssigen, weiter temperierten Lötmediums in eine äußere Umgebung versehen ist und
- mindestens eine Rückführungsleitung (4) zur Rückführung überschüssigen Lötmediums in das Behältnis (2),
**dadurch gekennzeichnet, dass** die mindestens eine Rückführungsleitung (4) mit einer dritten Temperiervorrichtung (11) zur Temperierung des überschüssigen Lötmediums gekoppelt ist,
wobei die mindestens eine Rückführungsleitung (4) mit einem trichterförmigen Auffangbehältnis (4.1) verbunden ist, dessen Einfüllöffnung (4.1.1) unterhalb der Austrittsöffnung (3.1) der Zuführungsleitung (3) und dieser zugewandt angeordnet ist und dessen Auslassöffnung (4.1.2) mit der Rückführungsleitung (4) verbunden ist und
- dass mindestens eine Regeleinheit (7) zur Temperaturregelung des Lötmediums vorgesehen ist, wobei die Regeleinheit (7) mit wenigstens zwei Temperatursensoren (6, 10) gekoppelt ist, wobei mindestens ein Temperatursensor (6) im Behältnis (2) und mindestens ein weiterer Temperatursensor (10) im Abschnitt (3.2) der zumindest einen Zuführungsleitung (3) angeordnet sind.

2. Vorrichtung (1) nach einem der vorhergehenden Ansprüche, umfassend wenigstens eine Fördervorrichtung (8) zur Förderung des temperierten, flüssigen Lötmediums in die zumindest eine Zuführungsleitung (3).

3. Vorrichtung (1) nach einem der vorhergehenden Ansprüche, wobei die zweite Temperiervorrichtung (9) im Abschnitt (3.2) der zumindest einen Zuführungsleitung (3) angeordnet ist.

4. Vorrichtung (1) nach einem der vorhergehenden Ansprüche, wobei die Austrittsöffnung (3.1) als eine Düsenaustrittsöffnung ausgebildet ist.

5. Vorrichtung (1) nach einem der vorhergehenden Ansprüche, wobei das Lötmedium Lötzinn ist.

6. Verfahren zum Betrieb einer Vorrichtung (1) nach einem der vorhergehenden Ansprüche, wobei
- ein Lötmedium in einem Behältnis (2) auf eine vorgegebene Temperatur oberhalb der Schmelztemperatur des Lötmediums temperiert wird,
- das flüssige, temperierte Lötmedium in zumindest eine Zuführungsleitung (3) gefördert wird,
- das flüssige Lötmedium in einem Abschnitt (3.2) der zumindest einen Zuführungsleitung (3) auf eine weitere vorgegebene Temperatur temperiert wird,
- wobei mittels einer Fördervorrichtung (8) das flüssige, auf die weitere vorgegebene Temperatur temperierte Lötmedium in die Zuführungsleitung (3) gefördert wird, so dass das Lötmedium aus einer Austrittsöffnung (3.1) der zumindest einen Zuführungsleitung (3) in eine äußere Umgebung austritt und
- überschüssiges Lötmedium über ein Auffangbehältnis (4.1) aufgefangen und von diesem über eine Rückführungsleitung (4) in das Behältnis (2) zurückgeführt wird.

7. Verfahren nach Anspruch 6, wobei das überschüssige Lötmedium in der wenigstens einen Rückführungsleitung (4) mittels einer dritten Temperiervorrichtung (11) auf eine vorgegebene Temperatur temperiert wird.

8. Verfahren nach Anspruch 6 oder 7, wobei das Lötmedium im Behältnis (2) und in der Rückführungsleitung (4) jeweils auf eine vorgegebene Temperatur von größer als 200°C, insbesondere größer als 220°C, temperiert wird.

9. Verfahren nach einem der Ansprüche 6 bis 8, wobei das Lötmedium im Abschnitt (3.2) der zumindest einen Zuführungsleitung (3) auf eine weitere vorgegebene Temperatur von größer als 450°C, insbesondere größer als 480°C, temperiert wird.

## Claims

1. Device (1) for providing a soldering medium, comprising:
- at least one container (2) for receiving a liquid soldering medium, wherein the at least one container (2) is thermally coupled to a first temperature control device (5) for controlling the temperature of the liquid soldering medium,
- at least one feed line (3), leading away from the container (2), wherein a portion (3.2) of the at least one feed line (3) is coupled to a second temperature control device (9) for further controlling the temperature of the liquid soldering medium and wherein the at least one feed line (3) is provided with an outlet opening (3.1) for letting out the liquid, further temperature-controlled soldering medium into an outer surrounding area and
- at least one return line (4) for returning excess soldering medium into the container (2),
**characterized in that** the at least one return line (4) is coupled to a third temperature control device (11) for controlling the temperature of the excess soldering medium, wherein the at least one return line (4) is connected to a funnel-shaped collecting container (4.1), the filling opening (4.1.1) of which is arranged underneath the outlet opening (3.1) of the feed line (3) and facing the latter and the discharge opening (4.1.2) of which is connected to the return line (4), and
- **in that** at least one closed-loop control unit (7) is provided for controlling the temperature of the soldering medium, wherein the closed-loop control unit (7) is coupled to at least two temperature sensors (6, 10), at least one temperature sensor (6) being arranged in the container (2) and at least one further temperature sensor (10) being arranged in the portion (3.2) of the at least one feed line (3).

2. Device (1) according to one of the preceding claims, comprising at least one delivery device (8) for delivering the temperature-controlled, liquid soldering medium into the at least one feed line (3) .

3. Device (1) according to one of the preceding claims, wherein the second temperature control device (9) is arranged in the portion (3.2) of the at least one feed line (3).

4. Device (1) according to one of the preceding claims, wherein the outlet opening (3.1) is formed as a nozzle outlet opening.

5. Device (1) according to one of the preceding claims, wherein the soldering medium is soldering tin.

6. Method for operating a device (1) according to one of the preceding claims, wherein
- the temperature of a soldering medium in a container (2) is controlled to a predetermined temperature above the melting temperature of the soldering medium,
- the liquid, temperature-controlled soldering medium is delivered into at least one feed line (3),
- the temperature of the liquid soldering medium in a portion (3.2) of the at least one feed line (3) is controlled to a further predetermined temperature,
- wherein the liquid soldering medium temperature-controlled to the further predetermined temperature is delivered by means of a delivery device (8) into the feed line (3), so that the soldering medium is let out of an outlet opening (3.1) of the at least one feed line (3) into an outer surrounding area and
- excess soldering medium is collected by means of a collecting container (4.1) and returned from the latter into the container (2) by way of a return line (4).

7. Method according to Claim 6, wherein the temperature of the excess soldering medium in the at least one return line (4) is controlled to a predetermined temperature by means of a third temperature control device (11).

8. Method according to Claim 6 or 7, wherein the temperature of the soldering medium in the container (2) and in the return line (4) is respectively controlled to a predetermined temperature of greater than 200°C, in particular greater than 220°C.

9. Method according to one of Claims 6 to 8, wherein the temperature of the soldering medium in the portion (3.2) of the at least one feed line (3) is controlled to a further predetermined temperature of greater than 450°C, in particular greater than 480°C.

## Revendications

1. Dispositif (1) d'alimentation d'un matériau de brasure, comprenant :
- au moins un récipient (2) pour recevoir un matériau de brasure liquide, l'au moins un récipient (2) étant accouplé thermiquement à un premier dispositif de régulation de température (5) pour la régulation de la température du matériau de brasure liquide,
- au moins une conduite d'alimentation (3) partant du récipient (2), une portion (3.2) de l'au moins une conduite d'alimentation (3) étant accouplée à un deuxième dispositif de régulation de température (9) en vue de la régulation supplémentaire de la température du matériau de brasure liquide, et l'au moins une conduite d'alimentation (3) étant pourvue d'une ouverture de sortie (3.1) pour permettre la sortie du matériau de brasure liquide, davantage régulé en température, dans un environnement extérieur et
- au moins une conduite de retour (4) pour réacheminer le matériau de brasure en excès dans le récipient (2),
**caractérisé en ce que** l'au moins une conduite de retour (4) est accouplée à un troisième dispositif de régulation de température (11) pour réguler la température du matériau de brasure en excès, l'au moins une conduite de retour (4) étant connectée à un récipient de collecte en forme d'entonnoir (4.1), dont l'ouverture de remplissage (4.1.1) est disposée en dessous de l'ouverture de sortie (3.1) de la conduite d'alimentation (3) et de manière tournée vers celle-ci, et dont l'ouverture de sortie (4.1.2) est connectée à la conduite de retour (4) et
- **en ce qu'**au moins une unité de régulation (7) pour la régulation de température du matériau de brasure est prévue, l'unité de régulation (7) étant accouplée à au moins deux capteurs de température (6, 10), au moins un capteur de température (6) étant disposé dans le récipient (2) et au moins un capteur de température supplémentaire (10) étant disposé dans la portion (3.2) de l'au moins une conduite d'alimentation (3).

2. Dispositif (1) selon l'une quelconque des revendications précédentes, comprenant au moins un dispositif de transport (8) pour transporter le matériau de brasure liquide régulée en température dans l'au moins une conduite d'alimentation (3).

3. Dispositif (1) selon l'une quelconque des revendications précédentes, dans lequel le deuxième dispositif de régulation de température (9) est disposé dans la portion (3.2) de l'au moins une conduite d'alimentation (3).

4. Dispositif (1) selon l'une quelconque des revendications précédentes, dans lequel l'ouverture de sortie (3.1) est réalisée sous forme d'ouverture de sortie de buse.

5. Dispositif (1) selon l'une quelconque des revendications précédentes, dans lequel le matériau de brasure est de la soudure d'étain.

6. Procédé de fonctionnement d'un dispositif (1) selon l'une quelconque des revendications précédentes, dans lequel
- un matériau de brasure est régulé en température dans un récipient (2) à une température prédéfinie au-dessus de la température de fusion du matériau de brasure,
- le matériau de brasure liquide régulé en température est acheminé dans au moins une conduite d'alimentation (3),
- le matériau de brasure liquide est régulé en température dans une portion (3.2) de l'au moins une conduite d'alimentation (3) à une température prédéfinie supplémentaire,
- le matériau de brasure liquide régulé à la température prédéfinie supplémentaire est transporté au moyen d'un dispositif de transport (8) dans la conduite d'alimentation (3) de telle sorte que le matériau de brasure sorte hors d'une ouverture de sortie (3.1) de l'au moins une conduite d'alimentation (3) dans un environnement extérieur et
- le matériau de brasure en excès est recueilli par le biais d'un récipient de collecte (4.1) et est ramené depuis celui-ci par le biais d'une conduite de retour (4) dans le récipient (2).

7. Procédé selon la revendication 6, dans lequel le matériau de brasure en excès est régulé en température à une température prédéfinie dans l'au moins une conduite de retour (4) au moyen d'un troisième dispositif de régulation de température (11).

8. Procédé selon la revendication 6 ou 7, dans lequel le matériau de brasure est régulé en température dans le récipient (2) et dans la conduite de retour (4) à chaque fois à une température prédéfinie supérieure à 200° C, en particulier supérieure à 220° C.

9. Procédé selon l'une quelconque des revendications 6 à 8, dans lequel le matériau de brasure est régulé en température dans la portion (3.2) de l'au moins une conduite d'alimentation (3) à une température prédéfinie supplémentaire supérieure à 450° C, en particulier supérieure à 480° C.
